(19) Europäisches Patentamt
European Patent Office
Office européen des brevets

(11) **EP 4 672 164 A1**

(12) **EUROPÄISCHE PATENTANMELDUNG**

(43) Veröffentlichungstag:
**31.12.2025  Patentblatt 2026/01**

(21) Anmeldenummer: **25181761.5**

(22) Anmeldetag: **10.06.2025**

(51) Internationale Patentklassifikation (IPC):
*G06V 10/20* (2022.01)     *G06K 7/14* (2006.01)
*G06V 10/774* (2022.01)     *G06V 10/82* (2022.01)

(52) Gemeinsame Patentklassifikation (CPC):
**G06V 10/82; G06K 7/1482; G06V 10/255;
G06V 10/774**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **28.06.2024  DE 102024118400**

(71) Anmelder: **STILL GmbH**
**22113 Hamburg (DE)**

(72) Erfinder:
• **Schuethe, Dennis**
**21244 Buchholz (DE)**

• **Bergmann, Ansgar**
**22941 Bargteheide (DE)**
• **Koenig, Ralf**
**21365 Adendorf (DE)**
• **Howey, Ansgar**
**22926 Ahrensburg (DE)**
• **Hindemith, Lukas**
**21244 Buchholz (DE)**
• **Rudall, Yan**
**25337 Elmshorn (DE)**

(74) Vertreter: **Patentship Patentanwaltgesellschaft**
**Schertlinstraße 29**
**86159 Augsburg (DE)**

(54) **VORRICHTUNG, VERFAHREN UND SYSTEM ZUM IDENTIFIZIEREN VON OBJEKTEN**

(57)    Die Erfindung betrifft eine Datenverarbeitungsvorrichtung (110) zum Identifizieren von Objekten (141; 143), insbesondere in einem Warenlager. Die Datenverarbeitungsvorrichtung (110) umfasst eine Schnittstelle (113), welche ausgebildet ist, eine Vielzahl von Bildern einer Vielzahl von optisch erfassbaren Identifizierungscodes zum Identifizieren eines jeweiligen Objekts (141; 143) zu erhalten. Ferner umfasst die Datenverarbeitungsvorrichtung (110) eine Prozessoreinrichtung (111), welche ausgebildet ist, ein neuronales Netz zu implementieren, wobei das neuronale Netz trainiert ist, in Vorwärtsverarbeitungsrichtung einen jeweiligen optisch erfassbaren Trainingsidentifizierungscode auf der Grundlage eines Bildes des optisch erfassbaren Trainingsidentifizierungscodes zu identifizieren. Die Prozessoreinrichtung (111) ist ferner ausgebildet, das neuronale Netz mit einer Vielzahl von Identitäten als Eingabe in Rückwärtsverarbeitungsrichtung zu durchlaufen, um als Ausgabe die Vielzahl von optisch erfassbaren Identifizierungscodes zum Identifizieren eines jeweiligen Objekts zu generieren. Ferner wird ein entsprechendes Verfahren zum Identifizieren eines jeweiligen Objekts (141; 143) beschrieben.

Fig. 2

EP 4 672 164 A1

**Beschreibung**

Die Erfindung betrifft eine Vorrichtung, ein Verfahren und ein System zum Identifizieren bzw. Erkennen von Objekten, insbesondere von Warenobjekten in einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, z.B. in der Intralogistik, d.h. dem innerbetrieblichen Materialfluss, z.B. in einem Warenlager, werden Flurförderzeuge, z.B. Gabelstapler und dergleichen eingesetzt. Ein Warenlager ist in der Regel ein sehr dynamisches Umfeld, in dem die Steuerung der mobilen Flurförderzeuge in der Regel entweder manuell, teilautomatisiert oder automatisiert erfolgt.

Moderne Flurförderzeuge sind häufig mit Sensoreinheiten, beispielsweise Kameras ausgestattet, welche ausgebildet sind, die Umgebung eines jeweiligen Flurförderzeugs zu erfassen, so dass auf der Grundlage der erfassten Sensordaten das Flurförderzeug gesteuert werden kann, insbesondere im automatisierten oder teilautomatisierten Betrieb. Es ist bekannt, zum Erkennen bzw. Identifizieren von Objekts in einem Warenlager Barcode-Reader zu verwenden. Ein Barcode-Reader kann Barcodes bzw. Labels jedoch in der Regel nur aus geringer Entfernung erkennen. Ferner können bei einem Barcode-Reader die Rohdaten in der Regel nicht für anderen Anwendungen verwendet werden. Die geringe Reichweite eines Barcode-Readers ist beispielsweise bei der Anfahrt eines mit einem Barcode-Reader ausgerüsteten Flurförderzeugs in Richtung einer Palette problematisch. Denn je nach Länge des Flurförderzeugs kann es notwendig sein, den Barcode bzw. das Label mindestens aus einer Entfernung von 4 bis 5 Metern zu erkennen, um die Bewegung des Flurförderzeugs bei der Anfahrt noch steuern zu können. Dies können Barcode-Reader in der Regel nicht leisten.

Vor diesem Hintergrund liegt der vorliegenden Erfindung die Aufgabe zu Grunde, eine verbesserte Vorrichtung sowie ein verbessertes Verfahren und System zum Identifizieren bzw. Erkennen von Objekts, insbesondere von Warenobjekten in einem Warenlager, bereitzustellen.

Diese Aufgabe wird gemäß einem ersten Aspekt der Erfindung durch eine Datenverarbeitungsvorrichtung zum Identifizieren von Objekts gelöst. Die Datenverarbeitungsvorrichtung umfasst eine Schnittstelle, welche ausgebildet ist, eine Vielzahl von Bildern einer Vielzahl von optisch erfassbaren Identifizierungscodes zum Identifizieren eines jeweiligen Objekts zu erhalten. Ferner umfasst die Datenverarbeitungsvorrichtung eine Prozessoreinrichtung bzw. einen Prozessor, welcher ausgebildet ist, ein neuronales Netz zu implementieren, wobei das neuronale Netz trainiert ist, in Vorwärtsverarbeitungsrichtung einen jeweiligen optisch erfassbaren Trainingsidentifizierungscode auf der Grundlage eines Bildes des optisch erfassbaren Trainingsidentifizierungscode zu identifizieren. Ferner ist der Prozessor ferner ausgebildet ist, das neuronale Netz mit einer Vielzahl von Identitäten als Eingabe in Rückwärtsverarbeitungsrichtung zu durchlaufen, um als Ausgabe des neuronalen Netzes die Vielzahl von optisch erfassbaren Identifizierungscodes zum Identifizieren eines jeweiligen Objekts zu generieren. Mittels der Datenverarbeitungsvorrichtung gemäß dem ersten Aspekt der Erfindung können vorteilhafte optisch erfassbare Identifizierungscodes generiert werden, die beispielswese auf Labels gedruckt sein können, die an den zu identifizierenden Warenobjekten angebracht, beispielweise aufgeklebt sind. Insbesondere können die mittels der Datenverarbeitungsvorrichtung erzeugten Identifizierungscodes auch bei großen Entfernungen besser mittels des neuronalen Netzes erkennbar sein als herkömmliche Identifizierungscodes. Wie der Fachmann erkennt und nachstehend im Detail beschrieben wird, basieren Aspekte der Datenverarbeitungsvorrichtung gemäß dem ersten Aspekt auf Erkenntnissen von feindlichen Angriffen bzw. Adversarial Attacks im Kontext von neuronalen Netzwerken. Unter Adversarial Attack versteht man im Kontext von Künstlicher Intelligenz (KI) die Verwendung von Adversarial Examples (zu Deutsch "feindliche Beispiele") zur Manipulation der Klassifikationsergebnisse. Ein Adversarial Example ist ein speziell manipuliertes Eingangs-Signal in ein künstliches neuronales Netzwerk, welches dieses absichtlich zu Fehlklassifikationen verleitet. Die Manipulation wird so vorgenommen, dass ein menschlicher Beobachter diese nicht bemerkt oder nicht als solche erkennt. Beispielsweise bei einem zur Objekterkennung trainierten neuronalen Netzwerk könnten die Pixel eines Bildes leicht verändert werden, sodass diese Veränderungen für Menschen nicht sichtbar sind, das Netzwerk die Objekte auf dem Bild jedoch falsch zuordnet.

In einer Ausführungsform ist der Prozessor ausgebildet, das neuronale Netz mit einer Vielzahl von Identitäten als Eingabe mittels eines Backpropagation-Verfahrens in Rückwärtsverarbeitungsrichtung zu durchlaufen, um als Ausgabe die Vielzahl von optisch erfassbaren Identifizierungscodes zum Identifizieren eines jeweiligen Objekts zu generieren.

Gemäß einer weiteren Ausführungsform ist der Prozessor ausgebildet, das neuronale Netz mit einer Vielzahl von Identitäten als Eingabe in Rückwärtsverarbeitungsrichtung zu durchlaufen, um mittels eines Gradientenverfahrens, insbesondere eines White-Box-Verfahrens, als Ausgabe die Vielzahl von optisch erfassbaren Identifizierungscodes zum Identifizieren eines jeweiligen Objekts zu generieren.

In einer Ausführungsform umfasst Vielzahl von Identitäten eine Vielzahl von Ziffern- und/oder Zeichenfolgen, beispielsweise eine Vielzahl von Uniform Resource Locator, URL, Codes oder eine Vielzahl von Universal Product Codes, UPCs.

Gemäß einer Ausführungsform ist das neuronale Netz der Datenverarbeitungsvorrichtung gemäß dem ersten Aspekt mit einer Vielzahl von Bildern einer Vielzahl von optisch erfassbaren Trainingsidentifizierungscodes trainiert, wobei die Vielzahl von optisch erfassbaren Trainingsidentifizierungscodes eine Vielzahl von Barcodes oder QR-Codes der Vielzahl von Identitäten umfassen.

In einer Ausführungsform umfasst die Vielzahl von Bildern der Vielzahl von optisch erfassbaren Trainingsidentifizierungscodes wenigstens zwei Bilder eines jeweiligen optisch erfassbaren Identifizierungscodes aus unterschiedlichen Blickrichtungen und/oder Entfernungen.

Gemäß einer Ausführungsform ist der Prozessor der Datenverarbeitungsvorrichtung gemäß dem ersten Aspekt ausgebildet, die Vielzahl von generierten optisch erfassbaren Identifizierungscodes zum Identifizieren eines jeweiligen Objekts jeweils als Patch-Element dem entsprechenden Barcode oder QR-Code hinzuzufügen, um die Vielzahl von optisch erfassbaren Identifizierungscodes zum Identifizieren eines jeweiligen Objekts zu generieren.

Gemäß einem zweiten Aspekt wird ein System bereitgestellt zum Verwalten einer Vielzahl von Objekten, insbesondere in einem Warenlager. Das System gemäß dem zweiten Aspekt umfasst wenigstens eine Datenverarbeitungsvorrichtung gemäß dem ersten Aspekt der Erfindung zum Identifizieren eines jeweiligen optisch erfassbaren Identifizierungscodes der Vielzahl von optisch erfassbaren Identifizierungscodes, der mit einem jeweiligen Objekt, insbesondere Warenobjekt in einem Warenlager, verknüpft ist. Ferner umfasst das System gemäß dem zweiten Aspekt der Erfindung wenigstens ein Flurförderzeug, insbesondere einen Gabelstapler, wobei das Flurförderzeug eine Bilderfassungseinrichtung, insbesondere Kamera, aufweist, welche ausgebildet ist, die Vielzahl von Bildern der Vielzahl von optisch erfassbaren Identifizierungscodes zum Identifizieren eines jeweiligen Objekts zu erfassen und der Datenverarbeitungsvorrichtung bereitzustellen.

In einer Ausführungsform umfasst das wenigstens eine Flurförderzeug die wenigstens eine Datenverarbeitungsvorrichtung.

Gemäß einer Ausführungsform ist die wenigstens eine Datenverarbeitungsvorrichtung als Server ausgebildet, wobei das wenigstens eine Flurförderzeug eine Schnittstelle umfasst, welche ausgebildet ist, die Vielzahl von Bildern der Vielzahl von optisch erfassbaren Identifizierungscodes zum Identifizieren eines jeweiligen Objekts an den Server zu übertragen.

Gemäß einem dritten Aspekt wird die vorstehend genannte Aufgabe gelöst durch ein Verfahren zum Identifizieren von Objekten, insbesondere von Warenobjekten in einem Warenlager. Das Verfahren gemäß dem dritten Aspekt umfasst die Schritte: Erhalten einer Vielzahl von Bildern einer Vielzahl von optisch erfassbaren Identifizierungscodes zum Identifizieren eines jeweiligen Objekts;

Implementieren eines neuronalen Netzes, wobei das neuronale Netz trainiert ist, in Vorwärtsverarbeitungsrichtung einen jeweiligen optisch erfassbaren
Trainingsidentifizierungscode auf der Grundlage eines Bildes des optisch erfassbaren Trainingsidentifizierungscode zu identifizieren; und

Durchlaufen des neuronalen Netzes mit einer Vielzahl von Identitäten als Eingabe in Rückwärtsverarbeitungsrichtung, um als Ausgabe die Vielzahl von optisch erfassbaren Identifizierungscodes zum Identifizieren eines jeweiligen Objekts zu generieren.

Das Verfahren gemäß dem dritten Aspekt kann mittels der Datenverarbeitungsvorrichtung gemäß dem ersten Aspekt durchgeführt werden. Daher ergeben sich weitere Ausführungsformen des Verfahrens gemäß dem dritten Aspekt aus den vorstehend und nachstehend beschriebenen Ausführungsformen der Datenverarbeitungsvorrichtung gemäß dem ersten Aspekt.

Weitere Vorteile und Einzelheiten der Erfindung werden beispielhaft anhand der in den schematischen Figuren dargestellten Ausführungsbeispiele näher erläutert. Hierbei zeigt:

Figur 1 eine schematische Darstellung eines Flurförderzeugs zum Transport von Waren in einem Warenlager mit einer Datenverarbeitungsvorrichtung zum Erkennen von Objekten gemäß einer Ausführungsform;

Figur 2 eine schematische Darstellung eines erfindungsgemäßen Systems mit einer Vielzahl von Flurförderzeugen und einer zentralen Datenverarbeitungsvorrichtung zum Erkennen von Objekten gemäß einer Ausführungsform;

Figuren 3a-c schematische Darstellungen einer Trainingsphase, einer Codeerstellungsphase und einer Anwendungsphase eines neuronalen Netzes einer Datenverarbeitungsvorrichtung zum Erkennen von Objekten gemäß einer Ausführungsform;

Figur 4 eine schematische Darstellung eines von einer erfindungsgemäßen Datenverarbeitungsvorrichtung implementierten White-Box-Verfahrens zum Erzeugen einer Vielzahl von optisch erfassbaren Identifizierungscodes; und

Figur 5 ein Flussdiagramm mit Schritten eines Verfahrens zum Betreiben einer Datenverarbeitungsvorrichtung zum Erkennen von Objekten gemäß einer Ausführungsform.

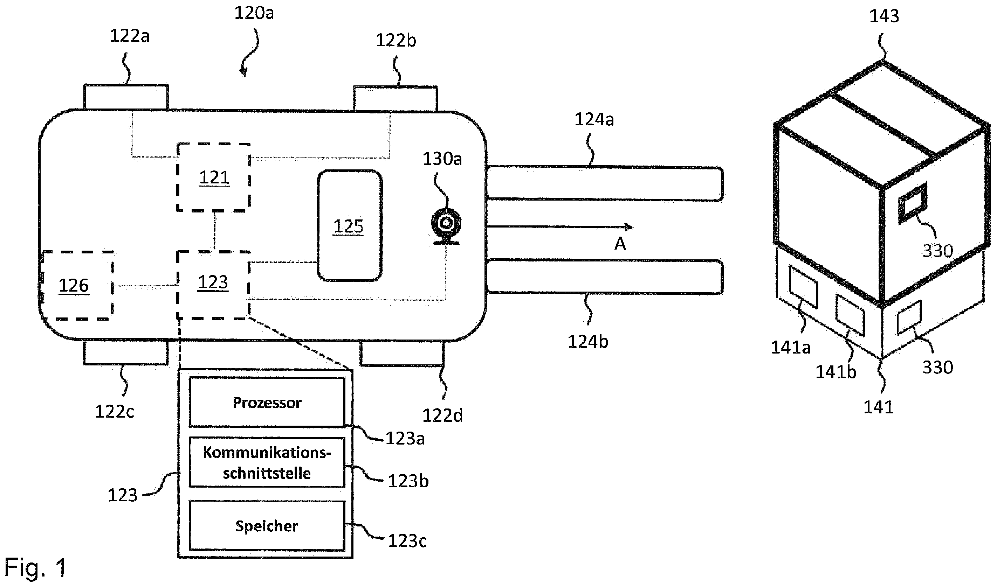

Figur 1 zeigt eine schematische Darstellung eines Flurförderzeugs 120a gemäß einer Ausführungsform zum Transportieren von Warenobjekten, wie beispielsweise Ladungsträgern 141 und/oder Waren 143, in einem industriellen Umfeld, insbesondere einem Warenlager. Die Warenobjekte 141, 143 sind jeweils mit einem Label mit einem optisch erfassbaren Identifizierungscode 330 versehen. Bei dem Flurförderzeug 120a kann es sich insbesondere um einen zweitweise autonom, teil-autonom und/oder manuell betriebenen, d.h. von einem Bediener geführten Gabelstapler 120a handeln. Bei dem Ladungsträger 141 kann es sich beispielsweise um eine Palette 141, insbesondere eine Euro-Palette 141 oder eine Gitterbox 141 handeln.

Wie in Figur 1 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 1 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, das Flurförderzeug 120a und das Paar von Lastgabeln 124a,b relativ zu den Warenobjekten 141, 143 zu bewegen, um beispielsweise die Orientierung und/oder den Abstand zwischen dem Flurförderzeug 120a und dem Ladungsträger 141 zu ändern und/oder das Paar von Lastgabeln 124a,b anzuheben oder abzusenken. Zu diesem Zweck kann, wie in Figur 1 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a kann ferner eine Sensoreinheit 130a, insbesondere eine Bildererfassungseinheit 130a umfassen, welche ausgebildet ist, bei der Bewegung des Flurförderzeugs 120a eine Vielzahl von Bildern der Umgebung des Flurförderzeugs 120a zu erfassen. Vorzugsweise umfasst die Bilderfassungseinheit 130a eine Kamera 130a, insbesondere eine 3D-Kamera 130a, beispielsweise eine Stereo-Kamera 130a oder eine Time-of-Flight-Kamera (TOF-Kamera) 130a. Neben einer Bilderfassungseinheit kann die Sensoreinheit 130a einen Lidar-Sensor 130a und/oder einen Radar-Sensor 130a zur Erfassung der Umgebung des Flurförderzeugs 120a umfassen.

Wie in Figur 1 angedeutet, ist die Sensoreinheit 130a, insbesondere Bilderfassungseinheit 130a vorzugsweise derart an dem Flurförderzeug 120a montiert, dass das Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Sensoreinheit 130a, insbesondere Bilderfassungseinheit 130a mit dem Blickfeld entlang der Vorwärtsbewegungsrichtung A des Flurförderzeugs 120a kann das Flurförderzeug 120a noch weitere Sensoreinheiten, insbesondere Bilderfassungseinheiten umfassen, beispielsweise eine Bilderfassungseinheit mit einem Blickfeld entlang einer Rückwärtsbewegungsrichtung des Flurförderzeugs 120a und/oder eine Bilderfassungseinheit mit einem Blickfeld senkrecht zu der Vorwärtsbewegungsrichtung A des Flurförderzeugs 120a.

Erfindungsgemäß umfasst das Flurförderzeug 120a ferner eine Datenverarbeitungsvorrichtung 123 (hierin auch als Steuereinheit 123 bezeichnet), welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 1 dargestellt, kann die Datenverarbeitungsvorrichtung bzw. Steuereinheit 123 ferner eine Kommunikationsschnittstelle 123b, insbesondere zum Erhalten der Bilddaten von der Sensoreinheit 130a, sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Datenverarbeitungsvorrichtung bzw. Steuereinheit 123 ausgeführt, den Prozessor 123a veranlasst, die im Folgenden beschriebenen Funktionen, Operationen und Verfahren durchzuführen.

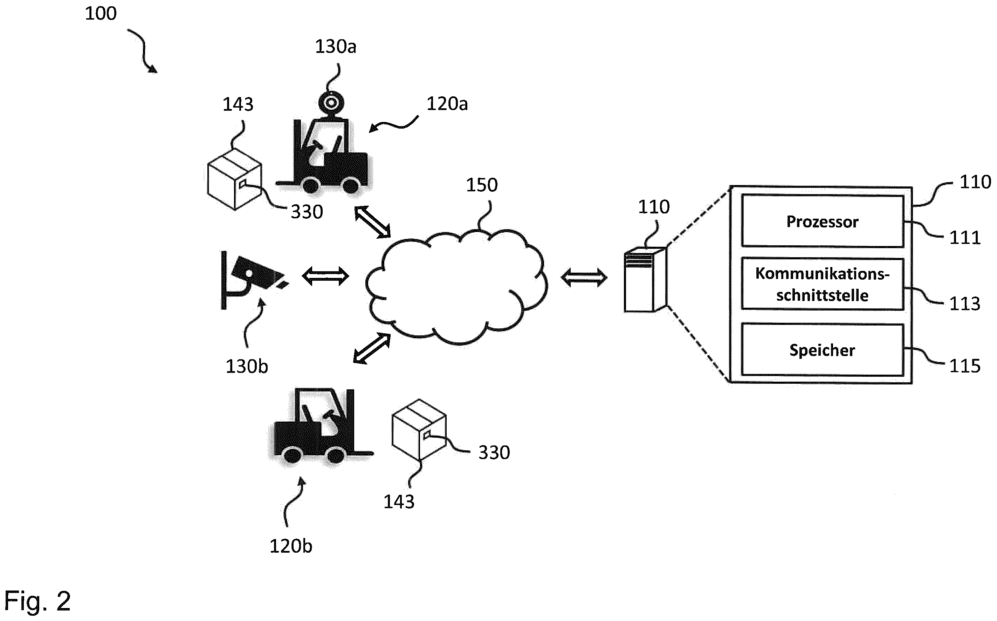

Figur 2 zeigt eine schematische Darstellung eines erfindungsgemäßen Systems 100 zum Betreiben des Flurförderzeugs 120a sowie einem oder mehreren weiterer Flurförderzeuge 120b, welche jeweils zeitweise automatisiert, teilautomatisiert und/oder manuell betreibbar sind, um Transportaufträge zum Transport von Warenobjekten 141, 143 in dem Warenlager durchzuführen.

Das System 100 umfasst neben der Vielzahl von Flurförderzeugen 120a,b eine zentrale Datenverarbeitungsvorrichtung 110, beispielsweise einen Server 110, welche ausgebildet ist, mit jedem Flurförderzeug 120a,b der Vielzahl von Flurförderzeugen 120a,b zu kommunizieren, um beispielsweise jedem der Vielzahl von Flurförderzeugen 120a,b Transportaufträge zum Transport der Warenobjekte 141, 143 in dem Warenlager zuzuteilen. Hierzu umfasst beispielsweise das Flurförderzeug 120a eine Kommunikationsschnittstelle 126, welche ausgebildet ist, mit einer entsprechenden Kommunikationsschnittstelle 113 der zentralen Datenverarbeitungsvorrichtung 110, zu kommunizieren, beispielsweise über ein drahtloses Kommunikationsnetzwerk 150, z.B. ein Wi-Fi-Netzwerk oder ein Mobilfunknetzwerk. Über ein solches drahtloses Kommunikationsnetzwerk 150 kann das Flurförderzeug 120a und/oder die zentrale Datenverarbeitungsvorrichtung 110 ferner mit einer weiteren externen Sensoreinheit 130b kommunizieren, wie beispielsweise einer in einem Gang des Warenlagers angebrachten Kamera 130b. Bei der in Figur 2 dargestellten zentralen Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 2 dargestellt, kann die zentrale Datenverarbeitungsvorrichtung 110 neben der bereits erwähnten Kommunikationsschnittstelle 113, einen oder mehrere Prozessoren 111 und einen, insbesondere nichtflüchtigen, Speicher 115 aufweisen. Der Speicher 115 kann ausgebildet sein, Daten und ausführbaren Programmcode zu speichern, der, wenn von dem Prozessor 111 der zentralen Datenverarbeitungsvorrichtung 110 ausgeführt, den Prozessor 111 veranlasst, die im Folgenden beschriebenen Funktionen, Operationen und Verfahren durchzuführen.

Erfindungsgemäß wird eine Datenverarbeitungsvorrichtung bereitgestellt zum Identifizieren der Warenobjekte 141, 143 auf der Grundlage der daran angebrachten, beispielsweise aufgedruckten oder in Form eines aufgeklebten Identifizierungscodes 330. Wie dies nachstehend im Detail beschrieben wird, kann die erfindungsgemäße Datenverarbeitungsvorrichtung in Form der Steuereinheit 123 des Flurförderzeugs 120a von Figur 1 ausgebildet sein oder als die zentrale Datenverarbeitungsvorrichtung 110 von Figur 2 zum Betreiben der Vielzahl von Flurförderzeugen 120a,b in dem Warenlager ausgebildet sein.

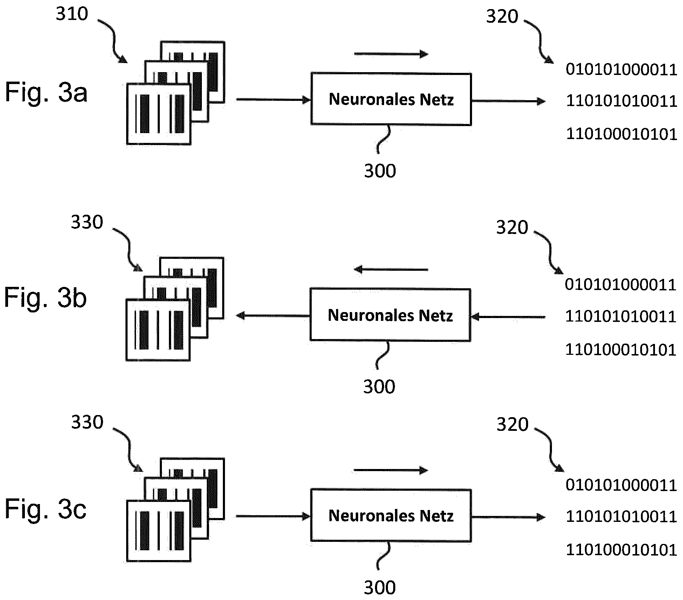

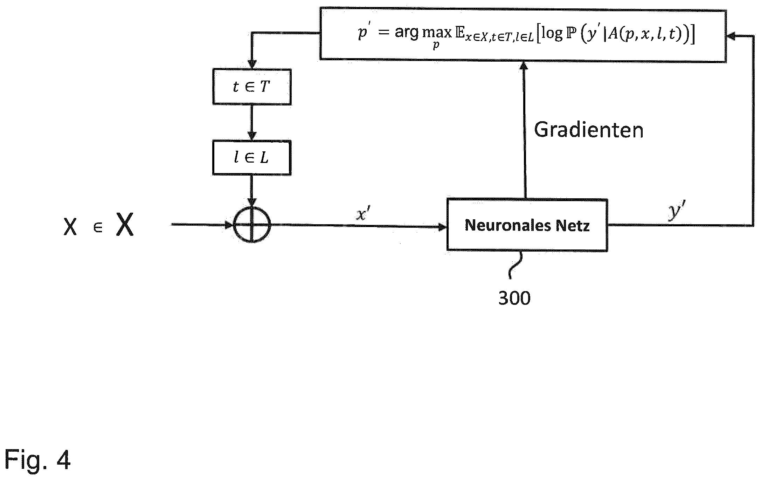

Nachstehend wird unter weiterer Bezugnahme auf die Figuren 3a-c und 4 im Detail eine erfindungsgemäße Ausführungsform der als Server 110 ausgebildeten Datenverarbeitungsvorrichtung 110 beschrieben. Wie jedoch bereits vorstehend erwähnt und wie der Fachmann erkennen wird, kann die im Folgenden beschriebene Funktionalität der zentralen Datenverarbeitungsvorrichtung 110 zum Betreiben der Vielzahl von Flurförderzeugen 120a,b in dem Warenlager alternativ oder zusätzlich teilweise oder vollständig durch die Steuereinheit 123 des Flurförderzeugs 120a implementiert werden.

Erfindungsgemäß ist die Schnittstelle 113 der zentralen Datenverarbeitungsvorrichtung 110 ausgebildet, eine Vielzahl von Bildern der optisch erfassbaren Identifizierungscodes 330 zum Identifizieren eines jeweiligen Warenobjekts 141, 143 zu erhalten, beispielsweise über ein drahtloses Netzwerk von den Flurförderzeugen 120a,b. Die Prozessoreinrichtung 111 der zentralen Datenverarbeitungsvorrichtung 110 ist ausgebildet, ein neuronales Netz 300 zu implementieren, welches in den Figuren 3a-c dargestellt ist. Wie in Figur 3a dargestellt, welche schematisch eine Trainingsphase zeigt, ist das von der Datenverarbeitungsvorrichtung 110 implementierte neuronale Netz 300 trainiert, in Vorwärtsverarbeitungsrichtung (in Figur 3a durch den Pfeil nach rechts angedeutet) einen jeweiligen optisch erfassbaren Identifizierungscode 310 (hierin auch als Trainingsidentifizierungscode 310 bezeichnet) auf der Grundlage eines Bildes des optisch erfassbaren Trainingsidentifizierungscode 310 zu identifizieren, d.h. dem optisch erfassbaren Trainingsidentifizierungscode 310 eine Identität 320 zuzuordnen, z.B. in Form einer Ziffernfolge und/oder Zeichenfolge, wie einem URL Code oder einem UPC. Gemäß einer kann die Vielzahl von optisch erfassbaren Trainingsidentifizierungscodes 310 eine Vielzahl von Barcodes 310 oder QR-Codes 310 der Vielzahl von Identitäten 320 umfassen. In einer Ausführungsform umfasst die Vielzahl von Bildern der Vielzahl von optisch erfassbaren Trainingsidentifizierungscodes 310 wenigstens zwei Bilder eines jeweiligen optisch erfassbaren Trainingsidentifizierungscodes 310 aus unterschiedlichen Blickrichtungen und/oder Entfernungen.

Erfindungsgemäß ist die Prozessoreinrichtung 111 der Datenverarbeitungsvorrichtung 110 ferner ausgebildet, das neuronale Netz 300 mit einer Vielzahl von Identitäten 320, beispielsweise in Form von URL Codes oder UPCs, als Eingabe in Rückwärtsverarbeitungsrichtung zu durchlaufen, wie dies in Figur 3b dargestellt ist und im Zusammenhang mit Figur 4 nachstehend detaillierter beschrieben wird, um als Ausgabe die Vielzahl von optisch erfassbaren Identifizierungscodes 330 zum Identifizieren eines jeweiligen Objekts 141, 143 zu generieren. Figur 3c zeigt die Anwendungsphase des in Figur 3a trainierten neuronalen Netzes 300 mit den in Figur 3b erzeugten optisch erfassbaren Identifizierungscodes 330 zum Identifizieren eines jeweiligen Objekts 141, 143. Mittels der Datenverarbeitungsvorrichtung 110 können vorteilhafte optisch erfassbare Identifizierungscodes 330 generiert werden, die beispielswese auf Labels gedruckt sein können, die an den zu identifizierenden Warenobjekten 141, 143 angebracht, beispielweise angeklebt sind. Insbesondere können die mittels der Datenverarbeitungsvorrichtung 110 erzeugten Identifizierungscodes 330 auch bei großen Entfernungen besser mittels des neuronalen Netzes 300 erkennbar sein als herkömmliche Identifizierungscodes.

Wie der Fachmann erkennt, basieren Aspekte der erfindungsgemäßen Datenverarbeitungsvorrichtung 110 auf Erkenntnissen von feindlichen Angriffen bzw. Adversarial Attacks im Kontext von neuronalen Netzwerken. Unter einem Adversarial Attack versteht man im Kontext von Künstlicher Intelligenz (KI) die Verwendung von Adversarial Examples (zu Deutsch "feindliche Beispiele") zur Manipulation der Klassifikationsergebnisse. Ein Adversarial Example ist ein speziell manipuliertes Eingangs-Signal in ein künstliches neuronales Netzwerk, welches dieses absichtlich zu Fehlklassifikationen verleitet. Die Manipulation wird so vorgenommen, dass ein menschlicher Beobachter diese nicht bemerkt oder nicht als solche erkennt. Beispielsweise bei einem zur Objekterkennung trainierten neuronalen Netzwerk könnten die Pixel eines Bildes leicht verändert werden, sodass diese Veränderungen für Menschen nicht sichtbar sind, das Netzwerk die

EP 4 672 164 A1

Objekte auf dem Bild jedoch falsch zuordnet. Wie dem Fachmann ferner bekannt ist, reagieren verschiedenen Ebenen bzw. Layers von neuronalen Netzen auf Daten mit einer gewissen Gewichtung. Ist der Trainingssatz eines neuronalen Netzes bekannt, dann kann beispielsweise bei einem Bild als Input analysiert werden, welche Pixel wie stark verändert werden müssen, um eine etwas andere Gewichtung zu erreichen. So kann teilweise minimales Rauschen in einem Bild dazu führen, dass es komplett falsch von einem neuronalen Netz kategorisiert wird. Bei Adversarial Examples in Form von Adversarial Patches handelt es sich um Bilder, welche ein neuronales Netz derart beeinflussen, dass das neuronale Netz nicht mehr das eigentliche abgebildete Objekt erkennt, sondern ein anderes Objekt, das in dem Adversarial Patch "codiert" ist.

Wie der Fachmann erkennt, können die von der erfindungsgemäßen Datenverarbeitungsvorrichtung 110 generierten optisch erfassbaren Identifizierungscodes 330 als Adversarial Patches betrachtet werden. Gemäß einer Ausführungsform ist der Prozessor 111 der Datenverarbeitungsvorrichtung 110 ausgebildet, die Vielzahl von generierten optisch erfassbaren Identifizierungscodes zum Identifizieren eines jeweiligen Objekts 141, 143 jeweils als Patch-Element, d.h. als Adversarial Patch einem entsprechenden Barcode oder QR-Code hinzuzufügen, welche zum Trainieren des neuronalen Netzes 300 verwendet worden sind, um die Vielzahl von optisch erfassbaren Identifizierungscodes 330 zum Identifizieren eines jeweiligen Objekts 141, 143 zu generieren.

Wie dies nachstehend unter weiterer Bezugnahme auf Figur 4 beschrieben wird, ist gemäß einer Ausführungsform der Prozessor 111 der Datenverarbeitungsvorrichtung 110 ausgebildet, das neuronale Netz 300 mit der Vielzahl von Identitäten 320 als Eingabe mittels eines Backpropagation-Verfahrens, beispielsweise mittels Gradienten-Verfahren und insbesondere mittels eines White-Box-Verfahrens, in Rückwärtsverarbeitungsrichtung zu durchlaufen, um als Ausgabe die Vielzahl von optisch erfassbaren Identifizierungscodes 330, d.h. die Adversarial Patches 330 zum Identifizieren eines jeweiligen Objekts 141, 143 zu generieren. Wie dem Fachmann bekannt ist, können Adversarial Patches mittels Gradientenverfahren erzeugt werden und auf dem sogenannten dem White-Box-Prinzip basieren. Die Grundidee des White-Box-Verfahrens, das, wie gesagt, gemäß einer Ausführungsform zum Erzeugen der Vielzahl von optisch erfassbaren Identifizierungscodes 330 durch die Datenverarbeitungsvorrichtung 110 implementiert werden kann, besteht darin, die Ausgabe bzw. den Output y des neuronalen Netzes 300 durch das Adversarial Patch so zu modifizieren, dass der entsprechende Identifizierungscode y' erkannt wird. Mit anderen Worten: das Patch-Element x' soll derart generiert werden, dass als Ausgabe y' resultiert. Hierzu können Gradienteninformationen des neuronalen Netzes 300 von der Datenverarbeitungsvorrichtung 110 verwendet werden, um das am meisten geeignete Patch zu bestimmen (daher wird dieser Ansatz, bei dem die Gradieteninformationen zur Verfügung stehen als White-Box-Ansatz bezeichnet, wohingegen der Fall, bei dem diese Informationen nicht zur Verfügung stehen, als Black-Box-Ansatz bezeichnet wird).

Mathematisch kann dies folgendermaßen beschrieben werden (siehe z.B. das Paper Tom R. Brown et al "Adversarial Patch", 31st Conference on Neural Information Processing System (NIPS 2017), Long Beach, California, USA, auf welches hier vollständig Bezug genommen wird). Für ein gegebenes Bild $x \in \mathbb{R}^{w \times h \times c}$ mit dem Patch-Element p mit der Patch-Position *l* und der Transformation *t* wird ein Operator erstellt *A(p, x, l, t),* welcher zunächst das Patch-Element transformiert, und dann an die gewünschte Position *l* in dem Bild *x* verschiebt. Wie in Figur 4 angedeutet, wird das Patch-Element *p* so optimiert, dass immer y' als Ergebnis ausgegeben wird, d.h.:

$$p' = \arg \max_{p} \mathbb{E}_{x \in X, t \in T, l \in L} \big[ \log \mathbb{P} \left( y' | A(p, x, l, t) \right) \big]$$

Bei diesem Ansatz werden somit Trainingsbilder *x* aus einem Satz von Bildern *X* genommen, um diese einer Translation aus bestimmten vorgegebenen zugelassenen Transformationen *T* zu unterziehen, und zwar für bestimmte Bereiche im Bild selbst, also die Positionen *L*. $\mathbb{P}(y, x)$ beschreibt dabei die Wahrscheinlichkeit, dass das Ergebnis y geliefert wird, wenn x als Eingabe gegeben ist. Optional kann das Patch-Element noch in seiner Art beeinflusst werden, indem dessen Änderung limitiert wird, was beispielsweise erreicht werden kann, indem eine Randbedingung bzw. ein Constraint eingeführt wird und die $L_\infty$ Norm benutzt wird, welche Abweichungen $\varepsilon$ vom Start-Patch $p_{origin}$ zulässt: $\|p - p_{origin}\|_\infty$.

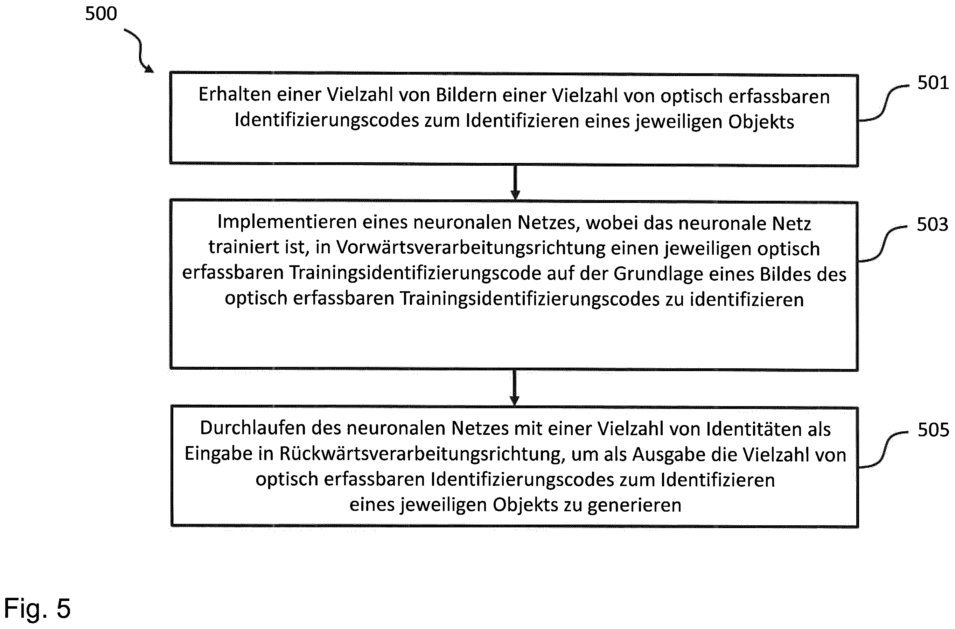

Figur 5 zeigt ein Flussdiagramm mit Schritten eines Verfahrens 500 zum Identifizieren von Objekten, insbesondere der Warenobjekte 141, 143 auf der Grundlage der daran angebrachten Identifizierungscodes 330. Das Verfahren 500 umfasst einen Schritt 501 des Erhaltens bzw. Empfangens einer Vielzahl von Bildern einer Vielzahl von optisch erfassbaren Identifizierungscodes 330 zum Identifizieren eines jeweiligen Objekts 141, 143. Ferner umfasst das Verfahren 500 einen Schritt 503 des Implementierens eines neuronalen Netzes 300, wobei das neuronale Netz 300 trainiert ist, in Vorwärtsverarbeitungsrichtung einen jeweiligen optisch erfassbaren Identifizierungscode 330 auf der Grundlage eines Bildes des optisch erfassbaren Identifizierungscodes 330 zu identifizieren. Das Verfahren 500 umfasst ferner einen Schritt 505 des Durchlaufens des neuronalen Netzes 300 mit einer Vielzahl von Identitäten 320 als Eingabe in Rückwärtsverarbeitungsrichtung, um als Ausgabe des neuronalen Netzes 330 die Vielzahl von optisch erfassbaren Identifizierungscodes 330 zum Identifizieren eines jeweiligen Objekts 141; 143 zu generieren.

Das erfindungsgemäße Verfahren 500 kann mittels der erfindungsgemäßen Datenverarbeitungsvorrichtung 123; 110 durchgeführt werden. Daher ergeben sich weitere Ausführungsformen des erfindungsgemäßen Verfahrens 500 aus den vorstehend und nachstehend beschriebenen Ausführungsformen der erfindungsgemäßen Datenverarbeitungsvorrichtung 123; 110.

**Patentansprüche**

1.  Datenverarbeitungsvorrichtung (123; 110) zum Identifizieren von Objekten (141; 143), wobei die Datenverarbeitungsvorrichtung (123; 110) umfasst:

    eine Schnittstelle (123b; 113), welche ausgebildet ist, eine Vielzahl von Bildern einer Vielzahl von optisch erfassbaren Identifizierungscodes (330) zum Identifizieren eines jeweiligen Objekts (141; 143) zu erhalten; und eine Prozessoreinrichtung (123a; 111), welche ausgebildet ist, ein neuronales Netz (300) zu implementieren, wobei das neuronale Netz (300) trainiert ist, in Vorwärtsverarbeitungsrichtung einen jeweiligen optisch erfassbaren Trainingsidentifizierungscode (310) auf der Grundlage eines Bildes des optisch erfassbaren Trainingsidentifizierungscodes (310) zu identifizieren, und

    wobei die Prozessoreinrichtung (123a; 111) ferner ausgebildet ist, das neuronale Netz (300) mit einer Vielzahl von Identitäten (320) als Eingabe in Rückwärtsverarbeitungsrichtung zu durchlaufen, um als Ausgabe die Vielzahl von optisch erfassbaren Identifizierungscodes (330) zum Identifizieren eines jeweiligen Objekts (141; 143) zu generieren.

2.  Datenverarbeitungsvorrichtung (123; 110) nach Anspruch 1, wobei die Prozessoreinrichtung (123a; 111) ausgebildet ist, das neuronale Netz (300) mit einer Vielzahl von Identitäten (320) als Eingabe mittels eines Backpropagation-Verfahrens in Rückwärtsverarbeitungsrichtung zu durchlaufen, um als Ausgabe die Vielzahl von optisch erfassbaren Identifizierungscodes (330) zum Identifizieren eines jeweiligen Objekts (141; 143) zu generieren.

3.  Datenverarbeitungsvorrichtung (123; 110) nach Anspruch 1 oder 2, wobei die Prozessoreinrichtung (123a; 111) ausgebildet ist, das neuronale Netz (300) mit einer Vielzahl von Identitäten (320) als Eingabe in Rückwärtsverarbeitungsrichtung zu durchlaufen, um mittels eines White-Box-Verfahrens als Ausgabe die Vielzahl von optisch erfassbaren Identifizierungscodes (330) zum Identifizieren eines jeweiligen Objekts (141; 143) zu generieren.

4.  Datenverarbeitungsvorrichtung (123; 110) nach einem der vorhergehenden Ansprüche, wobei die Vielzahl von Identitäten (320) eine Vielzahl von Ziffern- und/oder Zeichenfolgen (320) umfassen.

5.  Datenverarbeitungsvorrichtung (123; 110) nach einem der vorhergehenden Ansprüche, wobei die Vielzahl von optisch erfassbaren Trainingsidentifizierungscodes (310) eine Vielzahl von Barcodes oder QR-Codes der Vielzahl von Identitäten (320) umfassen.

6.  Datenverarbeitungsvorrichtung (123; 110) nach Anspruch 5, wobei die Vielzahl von Bildern der Vielzahl von optisch erfassbaren Trainingsidentifizierungscodes (310) wenigstens zwei Bilder eines jeweiligen optisch erfassbaren Trainingsidentifizierungscodes (310) aus unterschiedlichen Blickrichtungen und/oder Entfernungen umfassen.

7.  Datenverarbeitungsvorrichtung (123; 110) nach Anspruch 5 oder 6, wobei die Prozessoreinrichtung (123a; 111) ausgebildet ist, die Vielzahl von generierten optisch erfassbaren Identifizierungscodes (330) zum Identifizieren eines jeweiligen Objekts (141; 143) jeweils als Patch-Element dem entsprechenden Barcode oder QR-Code hinzuzufügen, um die Vielzahl von optisch erfassbaren Identifizierungscodes (330) zum Identifizieren eines jeweiligen Objekts (141; 143) zu generieren.

8.  System (100) zum Verwalten einer Vielzahl von Objekten (140; 141), insbesondere in einem Warenlager, wobei das System (100) umfasst:

    eine Datenverarbeitungsvorrichtung (123; 110) gemäß einem der vorhergehenden Ansprüche zum Identifizieren eines jeweiligen optisch erfassbaren Identifizierungscodes der Vielzahl von optisch erfassbaren Identifizierungscodes (330), der mit einem jeweiligen Objekt (141; 143) verknüpft ist; und wenigstens ein Flurförderzeug (120a,b), insbesondere Gabelstapler (120a,b), wobei das Flurförderzeug (120a,b) eine Bilderfassungseinrichtung (130a), insbesondere Kamera (130a), aufweist, welche ausgebildet ist, die Vielzahl von Bildern der Vielzahl von optisch erfassbaren Identifizierungscodes (330) zum Identifizieren eines jeweiligen Objekts (140; 141) zu erfassen und der Datenverarbeitungsvorrichtung (123; 110) bereitzustellen.

9. System (100) nach Anspruch 8, wobei das wenigstens eine Flurförderzeug (120a,b) die wenigstens eine Datenverarbeitungsvorrichtung (123) umfasst.

10. System (100) nach Anspruch 8, wobei die wenigstens eine Datenverarbeitungsvorrichtung (110) als Server (110) ausgebildet ist und wobei das wenigstens eine Flurförderzeug (120a,b) eine Schnittstelle (126) umfasst, welche ausgebildet ist, die Vielzahl von Bildern der Vielzahl von optisch erfassbaren Identifizierungscodes (330) zum Identifizieren eines jeweiligen Objekts (141; 143) an den Server (110) zu übertragen.

11. Verfahren (500) zum Identifizieren von Objekten (141; 143), wobei das Verfahren (500) umfasst:

Erhalten (501) einer Vielzahl von Bildern einer Vielzahl von optisch erfassbaren Identifizierungscodes (330) zum Identifizieren eines jeweiligen Objekts (141; 143);
Implementieren (503) eines neuronalen Netzes (300), wobei das neuronale Netz (300) trainiert ist, in Vorwärtsverarbeitungsrichtung einen jeweiligen optisch erfassbaren Trainingsidentifizierungscode (310) auf der Grundlage eines Bildes des optisch erfassbaren Trainingsidentifizierungscodes (310) zu identifizieren; und
Durchlaufen (505) des neuronalen Netzes (300) mit einer Vielzahl von Identitäten (320) als Eingabe in Rückwärtsverarbeitungsrichtung, um als Ausgabe die Vielzahl von optisch erfassbaren Identifizierungscodes (330) zum Identifizieren eines jeweiligen Objekts (141; 143) zu generieren.

EP 4 672 164 A1

Fig. 1

Fig. 2

EP 4 672 164 A1

**Fig. 3a**

310

320

Neuronales Netz

010101000011
110101010011
110100010101

300

**Fig. 3b**

330

320

Neuronales Netz

010101000011
110101010011
110100010101

300

**Fig. 3c**

330

320

Neuronales Netz

010101000011
110101010011
110100010101

300

11

Fig. 4

EP 4 672 164 A1

500

| Erhalten einer Vielzahl von Bildern einer Vielzahl von optisch erfassbaren Identifizierungscodes zum Identifizieren eines jeweiligen Objekts | 501 |

| Implementieren eines neuronalen Netzes, wobei das neuronale Netz trainiert ist, in Vorwärtsverarbeitungsrichtung einen jeweiligen optisch erfassbaren Trainingsidentifizierungscode auf der Grundlage eines Bildes des optisch erfassbaren Trainingsidentifizierungscodes zu identifizieren | 503 |

| Durchlaufen des neuronalen Netzes mit einer Vielzahl von Identitäten als Eingabe in Rückwärtsverarbeitungsrichtung, um als Ausgabe die Vielzahl von optisch erfassbaren Identifizierungscodes zum Identifizieren eines jeweiligen Objekts zu generieren | 505 |

Fig. 5

EP 4 672 164 A1

Europäisches
Patentamt

European
Patent Office

Office européen
des brevets

# EUROPÄISCHER RECHERCHENBERICHT

**Nummer der Anmeldung**

EP 25 18 1761

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CHINDAUDOM ARAN ET AL: "AdversarialQR: An adversarial patch in QR code format", 2020 JOINT 9TH INTERNATIONAL CONFERENCE ON INFORMATICS, ELECTRONICS & VISION (ICIEV) AND 2020 4TH INTERNATIONAL CONFERENCE ON IMAGING, VISION & PATTERN RECOGNITION (ICIVPR), IEEE, 26. August 2020 (2020-08-26), Seiten 1-6, XP033873863, DOI: 10.1109/ICIEVICIVPR48672.2020.9306675 [gefunden am 2020-12-23] | 1-7,11 | INV. G06V10/20 G06K7/14 G06V10/774 G06V10/82 |
| Y | * Zusammenfassung * * Seite 2-4, Abschnite III, IV, V * * Abbildung 2 * | 8-10 | |
| | ----- | | |
| X | CHINDAUDOM ARAN ET AL: "Surreptitious Adversarial Examples through Functioning QR Code", JOURNAL OF IMAGING, Bd. 8, Nr. 5, 22. April 2022 (2022-04-22), Seite 122, XP093327064, ISSN: 2313-433X, DOI: 10.3390/jimaging8050122 * Zusammenfassung * * Seite 3-6, Abschnitt 2 * * Abbildung 2 * | 1,11 | RECHERCHIERTE SACHGEBIETE (IPC) G06V G06K B66F G06Q G06T |
| | ----- | | |
| Y | US 2012/126000 A1 (KUNZIG ROBERT S [US] ET AL) 24. Mai 2012 (2012-05-24) * Absatz [0002] * * Absatz [0068] - Absätze [0069], [0071] * * Absatz [0163] - Absätze [0164], [0167] * | 8-10 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 22. Oktober 2025 | Wunderlich, Doreen |

Seite 1 von 2

| | Europäisches Patentamt<br>European Patent Office<br>Office européen des brevets | **EUROPÄISCHER RECHERCHENBERICHT** | **Nummer der Anmeldung**<br>EP 25 18 1761 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | TOM B BROWN ET AL: "Adversarial Patch", ARXIV.ORG, CORNELL UNIVERSITY LIBRARY, 201 OLIN LIBRARY CORNELL UNIVERSITY ITHACA, NY 14853,<br>27. Dezember 2017 (2017-12-27),<br>XP081317018,<br>* das ganze Dokument *<br>----- | 1-3,11 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 22. Oktober 2025 | Wunderlich, Doreen |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 25 18 1761

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2025

| Im Recherchenbericht angeführtes Patentdokument | Datum der Veröffentlichung | Mitglied(er) der Patentfamilie | Datum der Veröffentlichung |
|---|---|---|---|
| US 2012126000 A1 | 24-05-2012 | EP 2643792 A2<br>US 2012126000 A1<br>WO 2012068353 A2 | 02-10-2013<br>24-05-2012<br>24-05-2012 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PAPER TOM R. BROWN et al.** Adversarial Patch. *31st Conference on Neural Information Processing System (NIPS 2017)*